Europäisches Patentamt

European Patent Office

Office européen des brevets

(19)

(11) **EP 0 986 731 B1**

(12) **FASCICULE DE BREVET EUROPEEN**

(45) Date de publication et mention
de la délivrance du brevet:
**17.09.2003 Bulletin 2003/38**

(51) Int Cl.⁷: **G01B 7/30**, G01D 5/14,
G01D 5/16

(21) Numéro de dépôt: **98929490.5**

(22) Date de dépôt: **04.06.1998**

(86) Numéro de dépôt international:
**PCT/FR98/01139**

(87) Numéro de publication internationale:
**WO 98/055828 (10.12.1998 Gazette 1998/49)**

(54) **CAPTEUR MAGNETIQUE DE POSITION**

MAGNETISCHER POSITIONSGEBER

MAGNETIC POSITION SENSOR

(84) Etats contractants désignés:
**BE CH DE ES FR GB IT LI**

(30) Priorité: **04.06.1997 FR 9706897**

(43) Date de publication de la demande:
**22.03.2000 Bulletin 2000/12**

(73) Titulaire: **MMT(S.A.)**
**1700 Fribourg (CH)**

(72) Inventeurs:
• **OUDET, Claude**
**F-25000 Besançon (FR)**
• **GANDEL, Pierre**
**F-25500 Montfocon (FR)**
• **PRUDHAMM, Daniel**
**F-25220 Thise (FR)**

(74) Mandataire: **Breese, Pierre**
**Breese - Majerowicz - Simonnot**
**3, avenue de l'Opéra**
**75001 Paris (FR)**

(56) Documents cités:
**EP-A- 0 325 787        EP-A- 0 530 093**
**EP-A- 0 611 951        EP-A- 0 665 416**
**EP-A- 0 798 541        WO-A-92/10722**
**WO-A-93/23720         DE-U- 29 520 111**

# EP 0 986 731 B1

## Description

La présente invention concerne spécifiquement le domaine des capteurs dont le principe de fonctionnement est basé sur la détection de la variation du flux magnétique produit par un aimant permanent dans une structure ferromagnétique comportant un entrefer dans lequel est logée une sonde de hall ou un moyen de détection magnétosensible équivalent.

On connaît le principe général de tels capteurs. Ils sont par exemple décrit dans les brevets européens EP514530, EP665416, EP596068, ou EP325787.

On connaît également in capteur rotatif décrit dans le brevet européen EP611951, constitué par un une première pièce statorique solidaire d'un aimant en forme de demi-disque, mobile par rapport à deux pièces statoriques fixes définissant un entrefer secondaire à l'intérieur duquel est placé une sonde de Hall.

Un autre brevet, le brevet allemand DE29520111, décrit un capteur comportant une pièce statorique extérieure annulaire définissant un entrefer annulaire avec une pièce statorique intérieure. L'aimant permanent annulaire est placé dans l'entrefer principal. L'une des pièces statoriques annulaire présente un entrefer secondaire à l'intérieur duquel est placée une sonde de Hall.

Dans les deux cas, l'aimant est plongé en permanence et en totalité dans l'entrefer principal, et le signal détecté par la sonde de Hall est une combinaison de deux champs magnétiques ne permettant pas de garantir une parfaite linéarité du signal de sortie.

Le but de l'invention est de simplifier la réalisation de tels capteurs, et d'améliorer la linéarité de la réponse, c'est-à-dire l'amplitude du signal électrique délivré en fonction de la position de la partie mobile. L'invention diffère des capteurs de l'art antérieur principalement par le fait que l'aimant pénètre de façon progressive dans l'entrefer, et qu'il n'est totalement plongé dans l'entrefer que pour une position extrême. Dans les autres positions, l'aimant n'est plongé que partiellement dans l'entrefer, et le signal délivré par la sonde de Hall est fonction du degré de pénétration de l'aimant permanent dans l'entrefer. Ce mode de réalisation permet également de modifier la fonction de réponse, par le choix d'une géométrie particulière de l'aimant. Il est possible de générer un signal de réponse correspondant à une fonction quelconque du degré de pénétration, en choisissant une forme de l'aimant ou une forme des pièces statoriques définissant l'entrefer principal telle que la variation de la largeur, par exemple, correspondent à la fonction recherchée.

L'invention s'applique aussi bien à des capteurs linéaires qu'à des capteurs rotatifs.

L'invention concerne un capteur magnétique de position pour la délivrance d'un signal électrique proportionnel à la position selon la revendication 1.

Avantageusement, la longueur de la partie aimantée est au moins égale à C+E, où C désigne la course utile de la partie mobile et où E désigne l'épaisseur de l'entrefer principal.

De préférence, la longueur de l'entrefer est au moins égale à C+E, où C désigne la course utile de la partie mobile et où E désigne l'épaisseur de l'entrefer principal.

L'entrefer principal est constitué par l'espace compris entre les deux parties statoriques, espace à l'intérieur du quel l'aimant peut se déplacer pendant sa course utile, c'est-à-dire la course sur laquelle on souhaite obtenir un signal de position.

L'entrefer secondaire est la zone de collection du flux de l'entrefer principal. Il s'agit d'un espace à l'intérieur duquel l'aimant permanent ne pénètre pas pendant sa course utile.

De préférence, la longueur de la partie aimantée est supérieure à la longueur de l'entrefer.

Selon une variante préférée, le capteur magnétique de position est caractérisé en ce que la partie mobile comprend deux aimants aimantés en sens opposés selon la plus faible épaisseur, les deux aimants étant juxtaposés selon la direction perpendiculaire au déplacement.

De préférence, la partie mobile comprend deux aimants aimantés de forme semi-cylindrique mobile dans un entrefer principal définit entre une culasse cylindrique et des pièces statoriques semi-cylindriques, ces pièces semi-cylindriques définissant entre-elles un entrefer secondaire perpendiculaire à l'axe de rotation.

De préférence, la partie mobile comprend au moins un aimant permanent mince de forme rectangulaire, mobile dans un entrefer perpendiculaire à la direction de l'aimantation, définit par une structure statorique présentant une forme générale de "U", la structure statorique présentant un entrefer secondaire contenant un axe parallèle à la direction de déplacement, et perpendiculaire aux lignes de champ magnétique engendré par l'aimant permanent.

Selon une autre variante, l'aimant présente une déformation géométrique propre à permettre la compensation d'un défaut de linéarité due à une fuite magnétique ou à un champ pertubateur. Cette déformation sera par exemple, pour un capteur linéaire, une arête inclinée par rapport à la direction de déplacement, ou pour un capteur rotatif, une largeur variable de l'aimant.

L'invention sera mieux comprise à la lecture de la description d'exemples non limitatifs de réalisation qui suit, se référant aux dessins annexés où :

- les figures 1 à 3 représentent des vues respectivement en perspective, en coupe transversale et en coupe axiale selon AA' d'un capteur de position angulaire;
- la figure 4 représente la courbe tension/position mesurée sur la sonde de Hall ;
- les figures 5 à 7 représentent des vues respectivement en perspective, en coupe transversale et en coupe longitudinale selon BB' d'un capteur de position linéaire ;

- les figures 8 et 9 représentent des vues respectivement en coupe transversale et en coupe longitudinale selon CC' d'un capteur de position angulaire;
- les figures 10 et 11 représentent un autre capteur angulaire ;
- les figures 12 à 14 représentent trois exemples d'un capteur linéaire ;
- la figure 15 représente un autre exemple d'un capteur rotatif ;
- les figures 16 et 17 représentent deux modes de réalisation d'un capteur linéaire selon l'invention;
- la figure 18 représente une courbe de réponse d'un capteur selon le mode de la figure 17;
- la figure 19 représente un autre mode de réalisation d'un capteur linéaire selon l'invention.

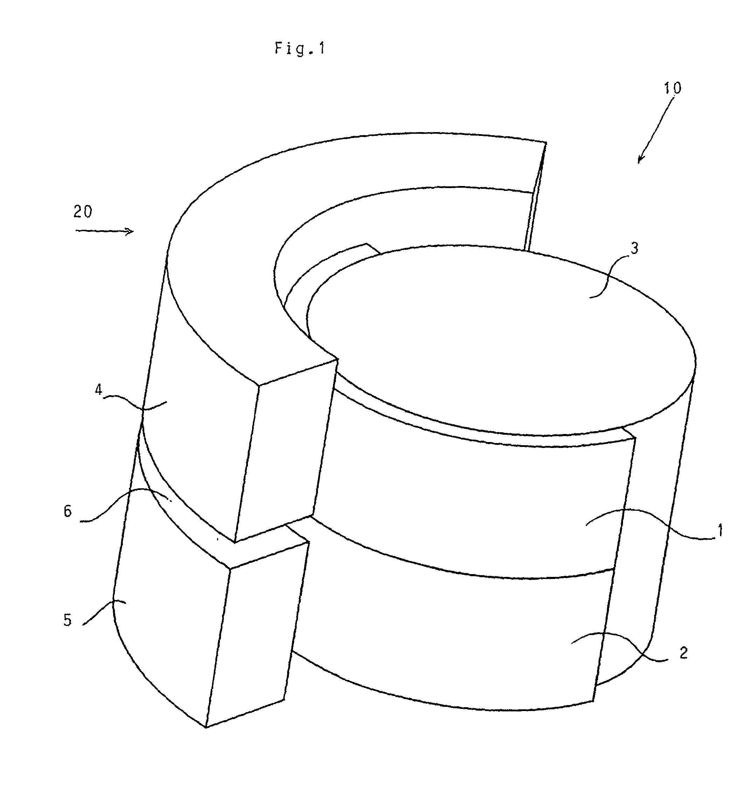

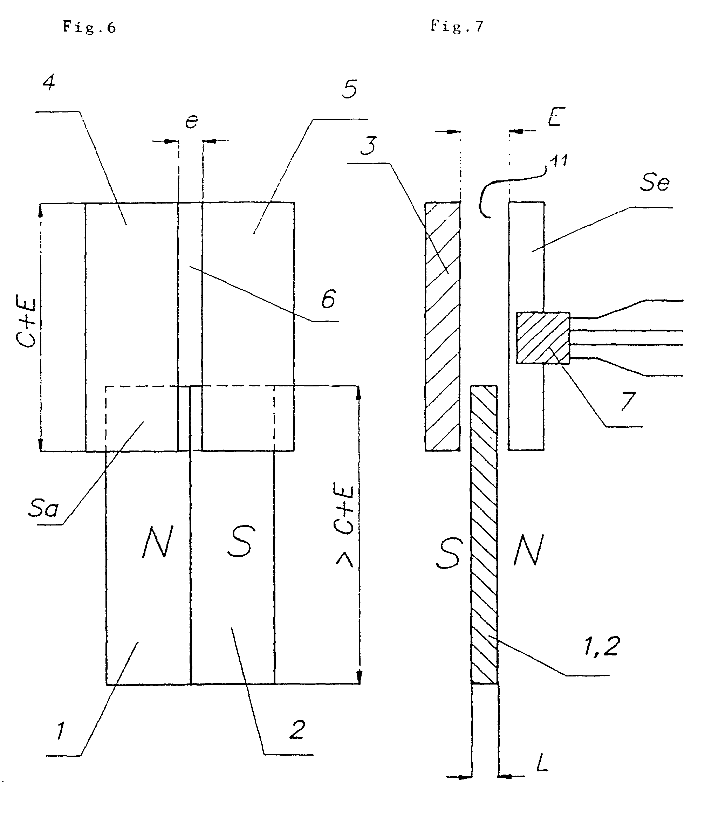

Les capteurs magnétiques de position montrés en figures 1 à 15 ne sont pas couverts par la revendication 1, ils sont seulement utiles à la compréhension de l'invention.

Les figures 1 à 3 représentent des vues respectivement en perspective, en coupe transversale et en coupe axiale selon AA' d'un capteur de position angulaire.

Ce capteur de position angulaire présente une partie mobile (10) formé de deux aimants minces (1, 2) et d'une culasse (3) et par une partie fixe (20) coaxiale formée de deux stators (4, 5).

La partie mobile (10) comprend dans l'exemple décrit deux aimants minces (1, 2) semi-cylindriques, s'étendant sur environ 180° d'arc. La valeur angulaire requise dépend de la course utile recherchée. Les deux aimants minces (1, 2) sont superposés et sont aimantés radialement, en sens opposés, selon la direction de la plus faible épaisseur. Ainsi, l'un des aimants (1) présente un pôle Nord extérieur et un pôle Sud intérieur, alors que l'autre aimant (2) présente un pôle Sud extérieur et un pôle Nord intérieur.

Ces aimants (1, 2) sont superposés et alignés selon l'axe de rotation, et sont jointifs dans l'exemple décrit. Ils sont collés sur une culasse (3) formée par un cylindre ferromagnétique, par exemple un alliage Fer-Nickel recuit. Ils peuvent également être réalisés par des aimants souples fixés par des goupilles en laiton. Un axe non représenté assure l'entraînement en rotation de la partie mobile (10). Il est à noter que par équivalence, la partie (10) pourrait être fixe, et la partie (20) entraînée en rotation, le capteur détectant en fait la position relative de ces deux parties.

La culasse (3) et les deux parties statoriques fixes (4, 5) définissent entre elles un entrefer annulaire (11) d'une épaisseur E.

La partie fixe (20) comprend deux pièces (4, 5) semi-annulaires réalisées en un matériau ferromagnétique. Ces deux pièces (4, 5) sont, comme les aimants (1, 2) superposés et alignés selon l'axe de rotation. Elles s'étendent sur environ 170° d'arc. Elles définissent entre-elles un entrefer secondaire (6) dans lequel est logé une sonde de Hall (7), ou tout autre composant magnétosensible.

Le fonctionnement du capteur dans cette variante est le suivant :

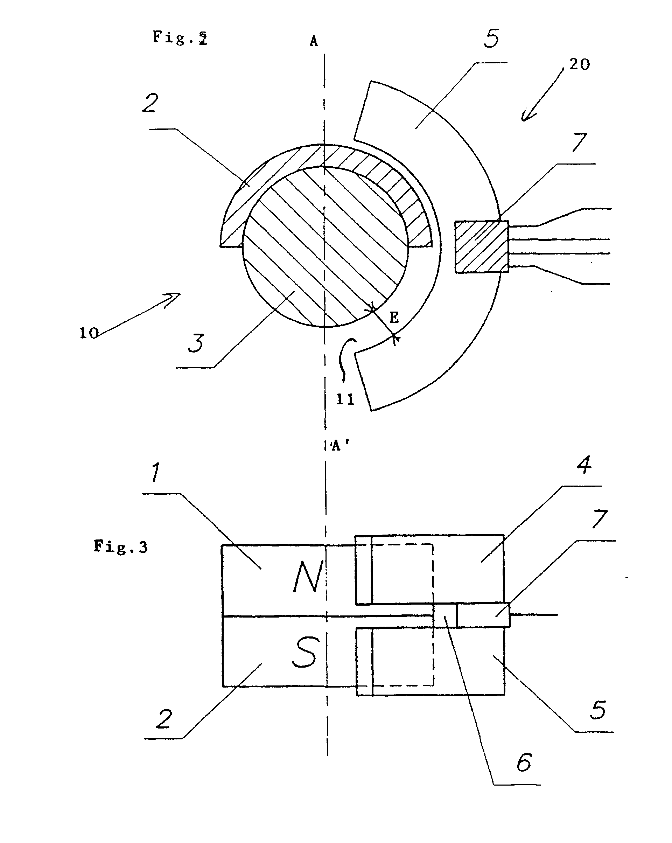

Lorsque la partie mobile (10) est positionnée de façon à ce que la totalité de la surface des aimants (1, 2) soit placée dans l'entrefer (11) - ce qui correspond à une rotation de 90° dans le sens anti-trigonométrique par rapport à la position représentée en figure 2 - les arcs d'aimants et de stator se correspondent et se font face.

Le pôle Nord de l'aimant (1) coïncide alors avec le pôle statorique supérieur (4). Le champ magnétique se ferme sur le pôle Sud de l'autre aimant (2) à travers la deuxième partie statorique (5), puis de la culasse (3). Le flux dans l'entrefer secondaire de mesure (6) est alors maximum. Le signal délivré par la sonde de Hall (7) est également maximal.

Lorsque la position des parties fixe (20) et mobile (10) est décalée de 180° par rapport à cette première situation, l'induction dans l'entrefer de mesure est nulle. L'aimant Nord se referme sur l'aimant Sud dans l'air, sans emprunter le chemin statorique.

Entre ces deux positions extrêmes, l'induction dans l'entrefer varie de façon linéaire en fonction de la position et est directement proportionnelle à la surface Sa des pôles aimantés en regard des deux stators (4, 5).

En se référant à la figure 3, on désignera par

- C la course utile, c'est-à-dire la course sur laquelle une mesure linéaire est recherchée
- E l'épaisseur radiale de l'entrefer principal entre les stators (4, 5) et la culasse (3) ;
- L l'épaisseur radiale des 2 aimants ;
- Br l'induction rémanente des 2 aimants ;
- e l'entrefer au niveau de la sonde de mesure
- $Sa(\Theta)$ la surface d'aimant en regard des stators pour une position angulaire $\Theta$ donnée
- SE la section de l'entrefer principal entre la culasse ferromagnétique cylindrique (3) et les deux stators (4, 5).

L'induction Be dans l'entrefer de mesure est sensiblement égale à :

$$Be(\Theta) \qquad (2.Br.L.Sa(\Theta))/(2.Se.E+SE.e)$$

La largeur annulaire des deux stators (4, 5) dont être au moins égale à C+E pour que le capteur présente une linéarité supérieure à 99% sur la pleine échelle du signal, pour une course utile C.

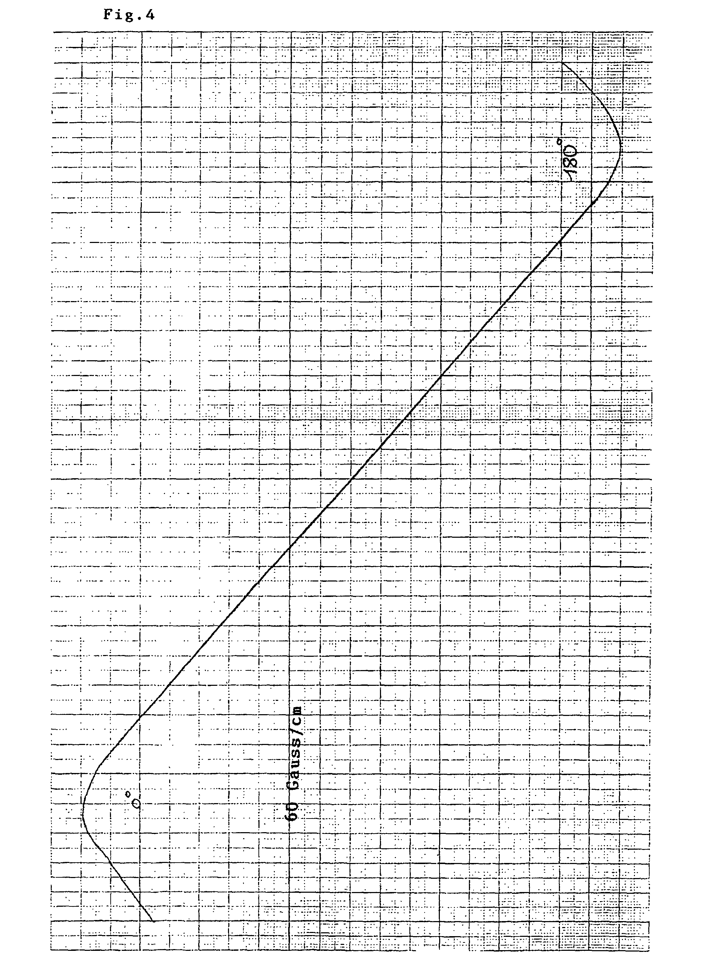

La figure 4 représente la courbe tension/position mesurée sur la sonde de Hall. On constate que cette courbe présente une très grande linéarité.

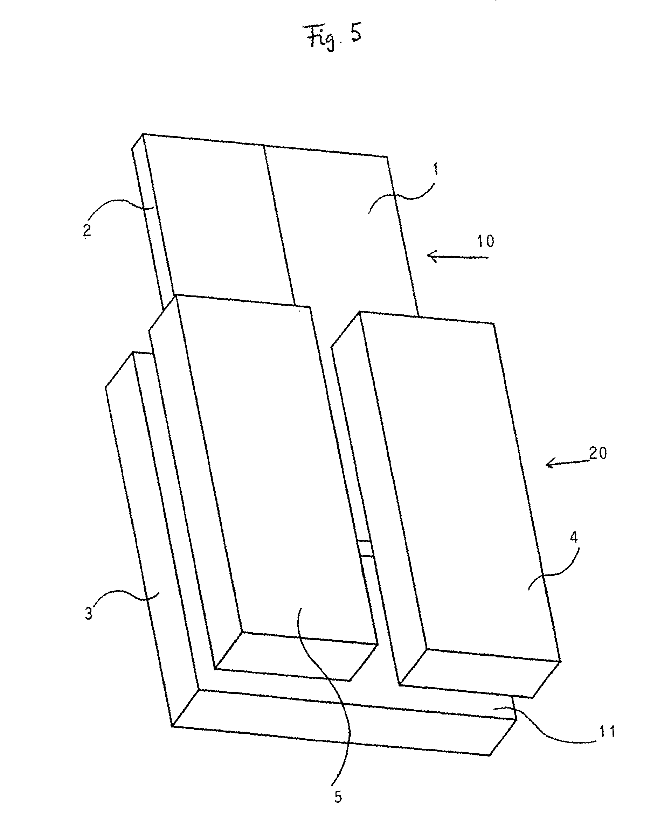

Les figures 5 à 7 représentent des vues respectivement en perspective, en coupe transversale et en coupe longitudinale selon BB' d'un capteur de position linéaire selon l'invention.

Comme dans la variante angulaire, le capteur comporte une partie mobile (10) et une partie fixe (20).

La partie mobile comprend deux aimants minces (1, 2) de forme rectangulaire, aimantés selon le sens de la plus faible épaisseur, en sens opposés. Ils sont alignés perpendiculairement à la direction du déplacement.

Dans cet exemple, la culasse (3) n'est pas collée sur les aimants (1,2), mais est fixe. Elle est formée par une plaque réalisée en un matériau ferromagnétique, par exemple un alliage fer-nickel recuit.

Les deux pièces statoriques (4, 5) définissent entre elles un entrefer secondaire (6) dans lequel est placée une sonde de Hall (7). La longueur des deux stators est préférentiellement supérieure à C+E pour garantir une bonne linéarité. La partie mobile permet une course entre une position extrême dans laquelle les aimants (1, 2) sont sortis en totalité ou en partie de l'entrefer principal (11), et une deuxième position extrême dans laquelle ils sont introduit dans l'entrefer (11).

Cet exemple permet de raccourcir la structure statorique par rapport aux capteurs de l'art antérieur.

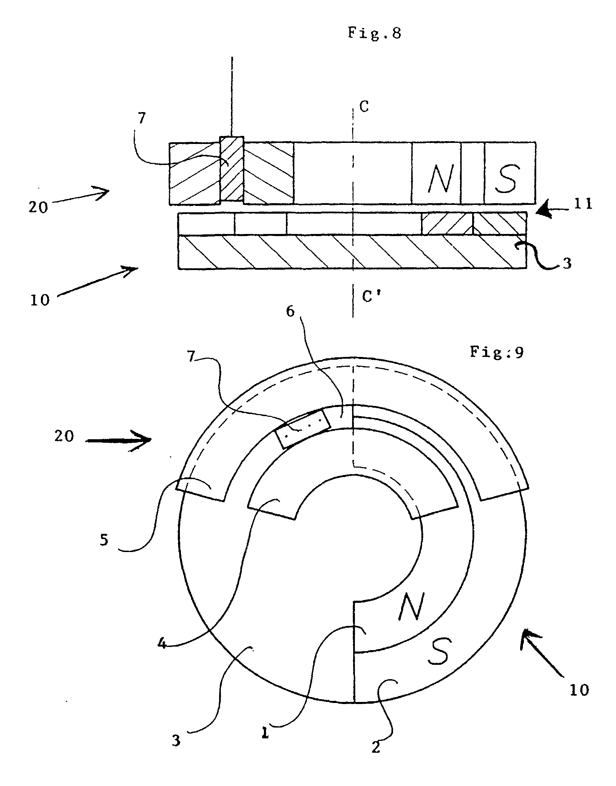

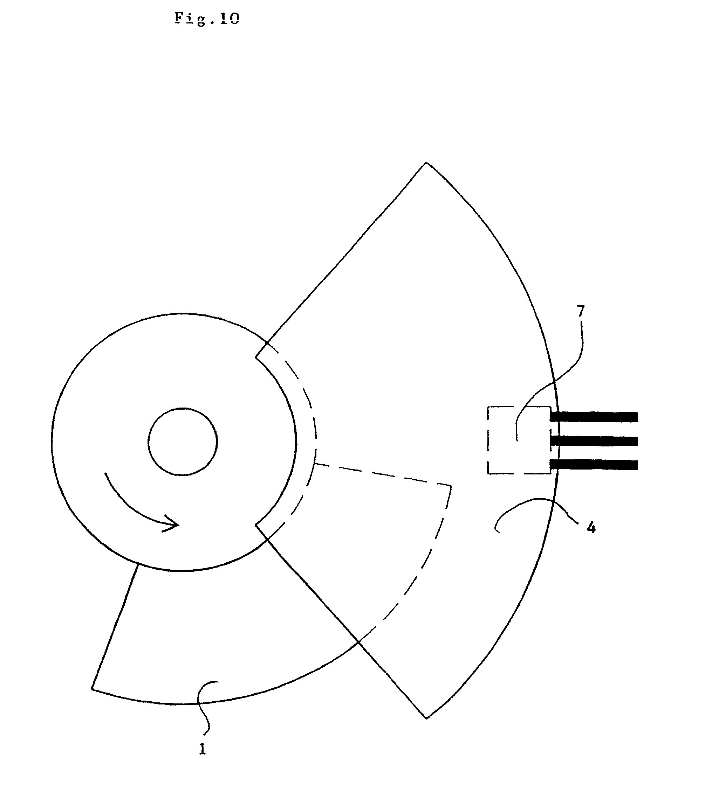

Les figures 8 et 9 représentent des vues respectivement en coupe transversale et en coupe longitudinale selon CC' d'un autre capteur de position angulaire.

La partie mobile (10) présente la forme d'un disque ou d'un arc de disque. Elle comporte une pièce discale formant la culasse (3) et supportant deux aimants (1, 2) en forme de secteurs semi-annulaires s'étendant sur des arcs de cercle de l'ordre de 180°. Ils sont aimantés transversalement, parallèlement à l'axe de rotation, en sens opposés. Les deux pièces statoriques (4, 5) sont également formés par des arcs semi-annulaires s'étendant sur un peu moins de 180°. Elles définissent entre elles une rainure semi-annulaire formant l'entrefer secondaire (6) à l'intérieur duquel est placée la sonde de Hall (7). La sonde de Hall délivre un signal électrique proportionnel au degré d'engagement des parties aimantées (1, 2) dans l'entrefer principal (3).

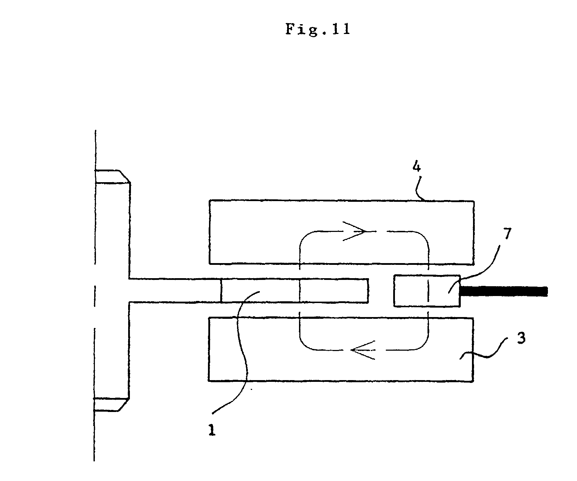

Il est par ailleurs possible de mettre en oeuvre une structure comportant un seul aimant et une seule pièce statorique. Une telle variante est représentée en figure 10 et 11.

Dans cet exemple, le capteur comporte un seul aimant (1) aimanté selon le sens de la plus petite épaisseur, parallèlement à l'axe de rotation. La fermeture du flux s'effectue à travers le secteur semi-discal (4) formant la pièce statorique, la sonde de Hall (7), et la culasse (3).

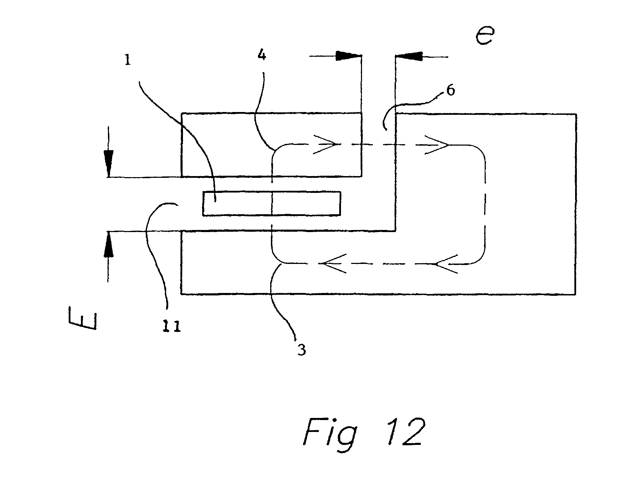

Les figures 12 à 14 représentent trois autres exemples d'un capteur linéaire.

Dans ces exemples, la partie aimantée comporte un seul aimant mince (1). Cet aimant pénètre plus ou moins complètement dans l'entrefer principal (11). Le champ magnétique engendré par l'aimant mince (1) se ferme à travers une pièce statorique (4), un entrefer secondaire (6) dans lequel est placée une sonde de Hall, et la culasse (3). L'entrefer de mesure (6) est formé par une rainure disposée dans un plan perpendiculaire aux lignes de champs engendrées par l'aimant permanent (1). Ce plan contient un axe parallèle à l'axe de déplacement de la partie mobile (10). La partie fixe est composée par une pièce ferromagnétique présentant une section en forme de "U", l'aimant pénétrant plus ou moins entre les deux branches de ce "U", délimitant ente elles l'entrefer principal. L'entrefer secondaire prévu soit sur l'une des branches de ce "U", soit dans le fond du "U". L'aimant se déplace perpendiculairement à cette section en "U". Il est aimanté transversalement, c'est-à-dire selon un axe perpendiculaire aux deux branches du "U". L'aimant peut être aimanté en place, après assemblage du capteur.

Selon la variante représentée en figure 12, l'entrefer de mesure est perpendiculaire au plan de l'aimant et de l'entrefer principal (11).

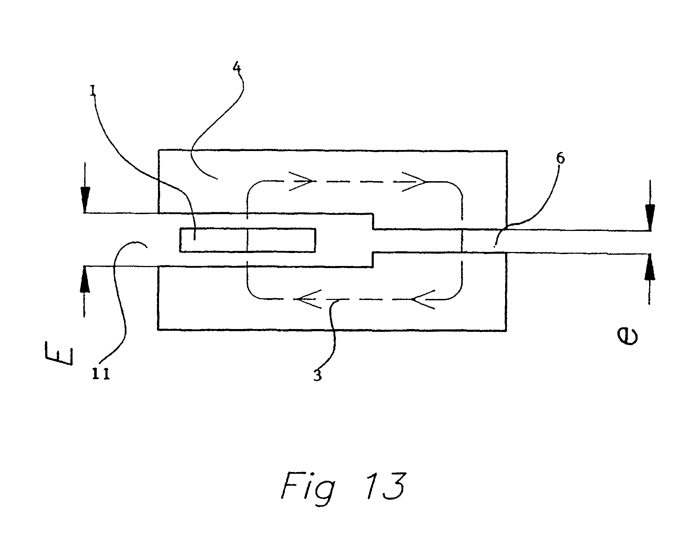

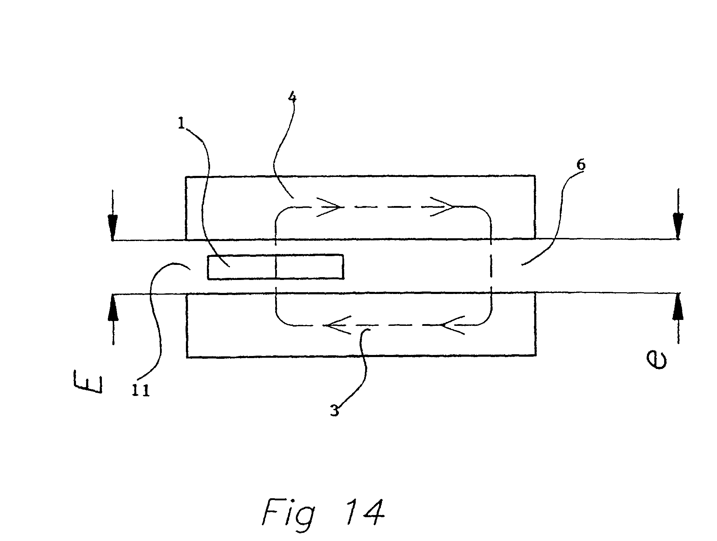

En figure 13 est représentée une variante selon laquelle l'entrefer secondaire (6) est une fente étroite prévue dans le prolongement de l'entrefer principal (11). Dans la figure 14, cet entrefer secondaire (6) prolonge l'entrefer principal (11).

Pour les exemples représentés en figures 12 à 14, l'induction Be dans l'entrefer de mesure est sensiblement égale à :

$$Be(x) \quad (Br.L.Sa(x))/(Se.E+SE.e)$$

où x désigne la position de l'aimant suivant la direction d'engagement.

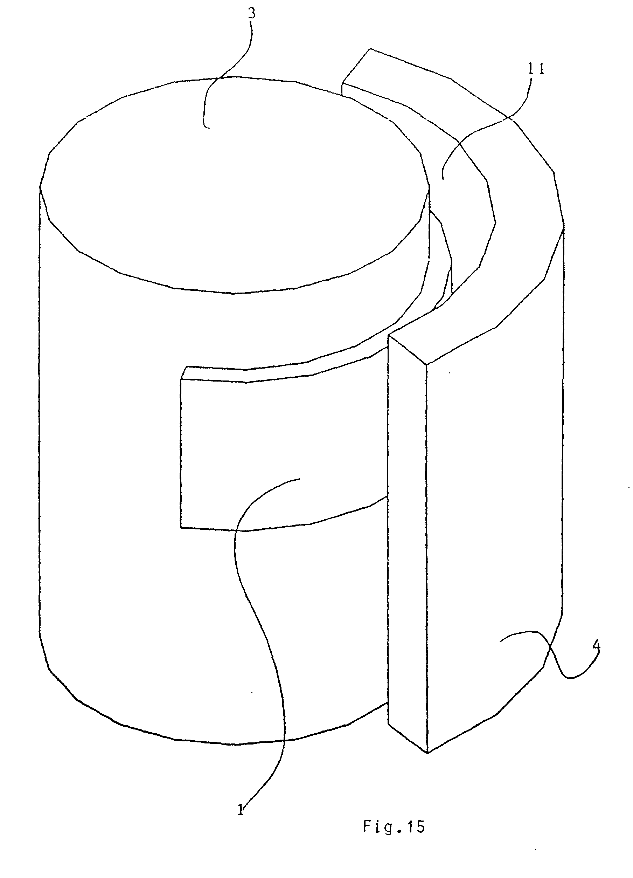

La figure 15 représente une autre variante d'un capteur rotatif à un seul aimant (1) de forme semi-cylindrique aimanté radialement selon le sens de la plus petite épaisseur, perpendiculairement à l'axe de rotation. L'aimant (1) présente une forme générale de tuile, s'étendant sur environ 180°. Il est collé sur une culasse (3) formée par un cylindre ferromagnétique. L'ensemble constitué par l'aimant (1) et la culasse (3) constitue la partie mobile par rapport à une partie fixe formée par un stator (4) semi-annulaire réalisé en un matériau ferromagnétique.

L'aimant (1) s'engage comme dans les variantes précédentes dans un entrefer principal annulaire (11) d'épaisseur E. La fermeture du flux s'effectue par l'intermédiaire du stator (4) et de la culasse cylindrique (3) au travers de la sonde de Hall (7), perpendiculairement à l'axe de rotation, dans un entrefer prolongeant l'entrefer principal.

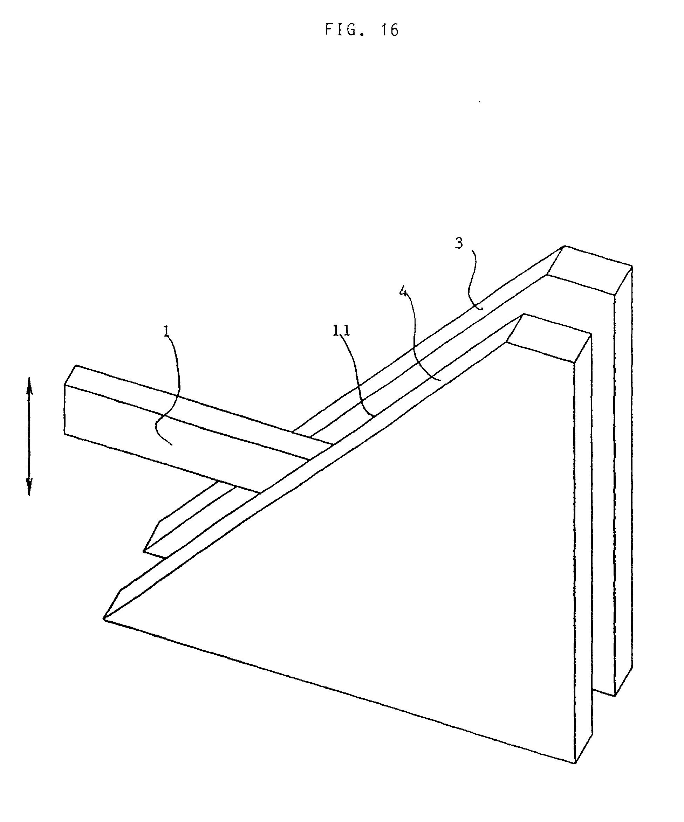

La figure 16 représente un mode de réalisation d'un capteur linéaire selon l'invention. Ce capteur délivre un signal proportionnel au degré d'engagement des parties dans l'entrefer principal (11). Cet entrefer principal (11) est délimité par deux surfaces (3, 4) en regard, de forme trapézoïdale. L'aimant (1) se déplace suivant une direction oblique par rapport au bord avant des surfaces ferromagnétiques (3, 4) de façon à ce que le degré d'engagement de l'aimant dans l'entrefer varie en fonction de la position de l'aimant selon cette direction oblique. Ce mode de réalisation permet de réaliser un capteur dont la course est égale à sa longueur.

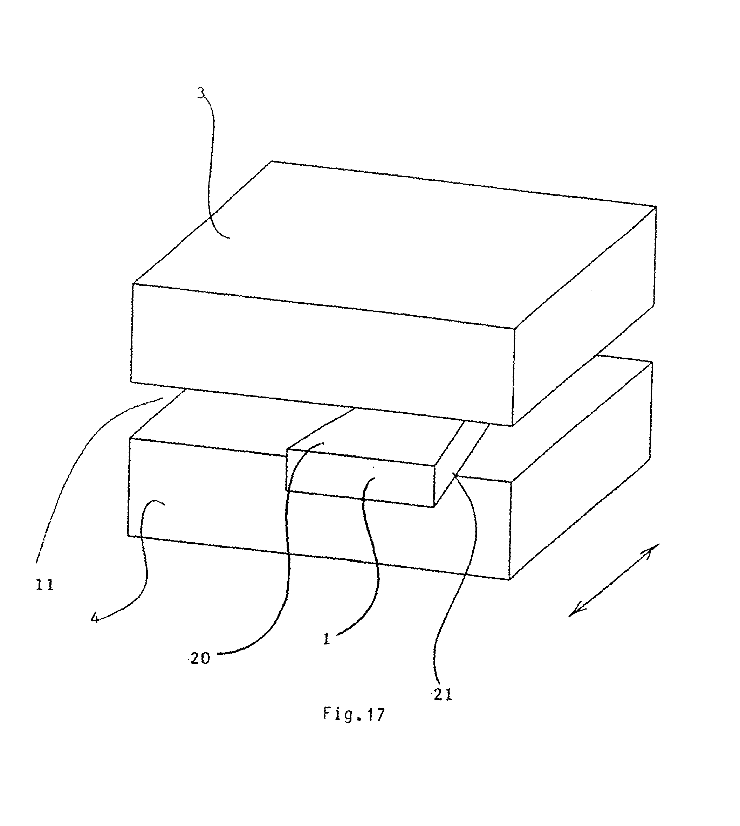

La figure 17 représente un autre mode de réalisation d'un capteur linéaire selon l'invention comportant un aimant (1) mobile dans un entrefer principal (11) prévu entre une culasse (3) et un stator (4). L'aimant présente deux arêtes (20, 21) s'étendant dans la direction de déplacement non parallèles entre elles. Le fait que l'une des arêtes (21) forme un angle différent de 0° avec l'axe de déplacement permet d'introduire une loi de variation spécifique.

En effet, la surface d'engagée n'est alors plus proportionnelle de la position x de l'aimant, mais varie selon une loi S(x) = ax(bx+c) où a, b, et c sont- des coefficient liés à la géométrie de l'aimant. La variation d'induction sera toujours donnée par la formule

$$Be(x) \qquad (Br.L.Sa(x))/(Se.E+SE.e).$$

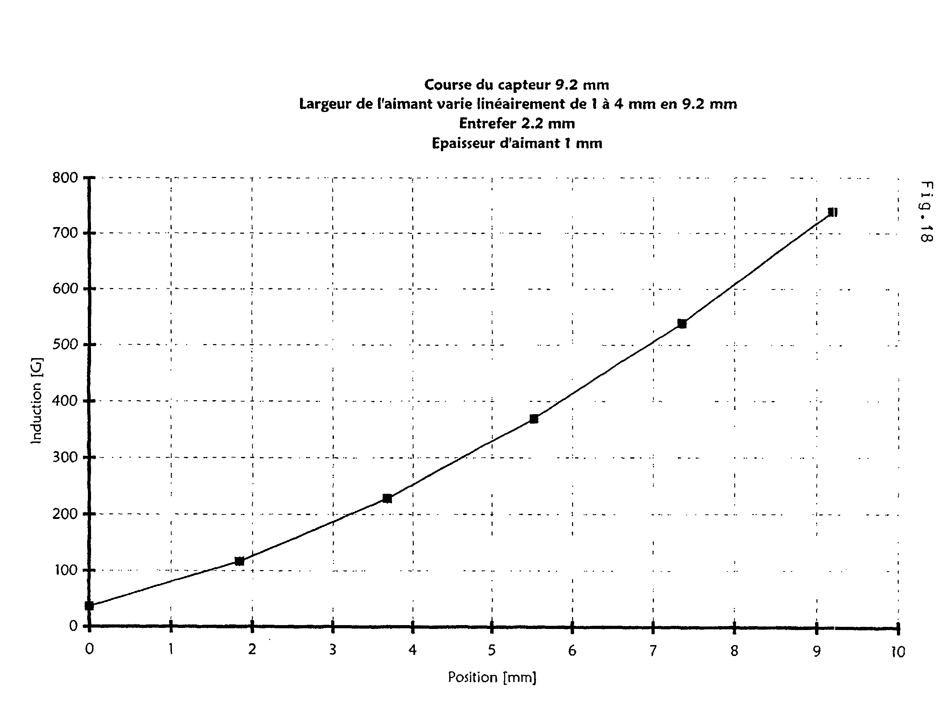

La réponse sera alors une réponse parabolique, telle que représentée en figure 18.

Une telle variante permet de compenser la non linéarité due à une fuite magnétique ou à un élément perturbateur.

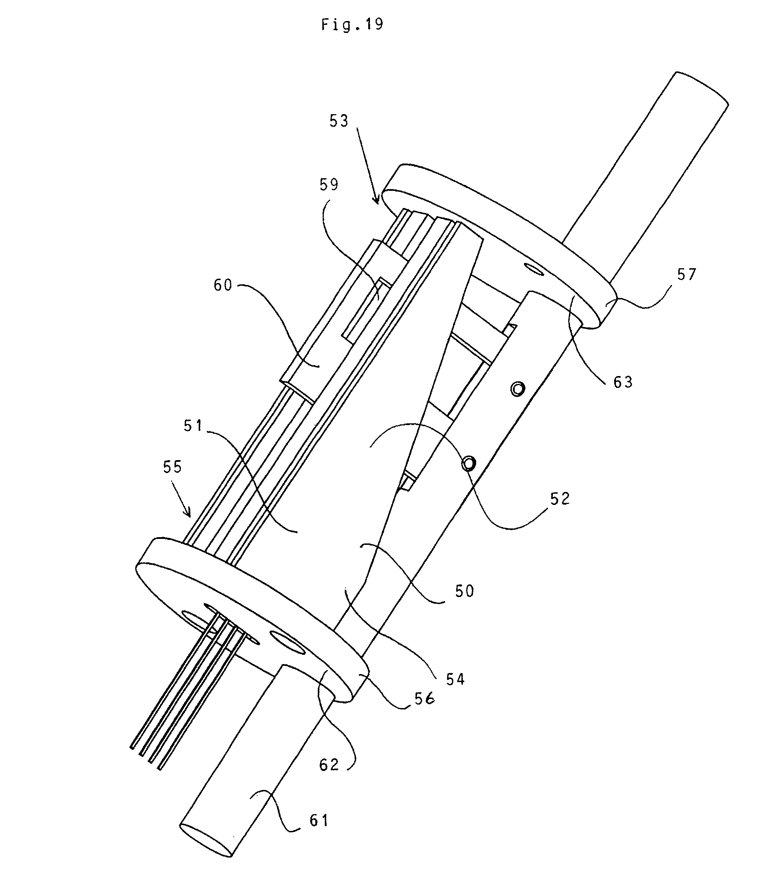

La figure 19 représente une vue en perspective d'un mode de réalisation d'un capteur selon l'invention lineaire.

Il est constitué par deux plaques en fer doux (50, 51) formant les deux pièces statoriques. Ces plaques présentent une partie (52, 53) de largeur variable, en l'occurrence de forme triangulaire dans l'exemple représenté, prolongée à l'arrière par une partie (54, 55) constituant la liaison avec l'entrefer secondaire.

L'entrefer principal est défini entre les deux parties (52, 53) de section variable. L'entrefer secondaire est compris entre les deux parties arrières (54, 55). Ces plaques sont montées à l'avant et à l'arrière sur des flasques (56, 57) perpendiculaires au plan des pièces statoriques. Les flasques sont constituées en matière plastique. L'ensemble forme une structure rigide.

L'aimant permanent (59) est de forme rectangulaire. Il est monté dans un cadre (60) en matière plastique, solidaire d'une tige de commande (61). Cette tige de commande traverse des lumières (62, 63) prévues dans les flasques (56, 57). La tige (61) entraîne le déplacement de l'aiment (59) dans l'entrefer principale de forme triangulaire dans le mode décrit. Le degré de pénétration varie entre une valeur minimale, lorsque l'aimant est repoussé contre la flasque avant (57) (à droite sur la figure 19), et une valeur maximale lorsque l'aimant (59) est repoussé à l'extrémité opposé de l'entrefer principal, s'arrêtant au niveau du début des parties arrières (54, 55) des pièces statoriques.

## Revendications

1. Capteur magnétique de position pour la délivrance d'un signal électrique proportionnel à la position, constitué par une partie mobile présentant au moins un aiment permanent mince (1) aimanté transversalement dans le sens de la plus faible épaisseur, mobile dans un entrefer principal (11) perpendiculaire au sens de l'aimantation, ledit entrefer (11) étant défini par au moins deux parties ferromagnétiques (3, 4), ces parties ferromagnétiques définissant entre-elles un entrefer secondaire comportant un capteur magnétosensible, la partie mobile étant agencée de manière à ce que la pénétration d'une partie aimantée dans l'entrefer principal (11) soit partielle sur une partie de la course utile de façon à ce que le capteur magnétosensible délivre un signal proportionnel au degré d'engagement de la partie aimantée dans ledit entrefer principal la partie aimantée dudit capteur comprenant un aimant unique (1) se déplaçant suivant une direction oblique par rapport au bord avant des surfaces ferromagnétiques (3, 4) de façon à ce que le degré d'engagement de l'aimant (1) dans l'entrefer principal (11) varie en fonction de la position de l'aimant selon cette direction oblique, et ledit capteur magnétosensible étant disposé dans l'entrefer secondaire placé dans un plan perpendiculaire aux lignes de champs engendrées par l'aimant permanent.

2. Capteur magnétique de position selon la revendication 1 dans lequel la longueur de la partie aimantée est au moins égale à C+E, où C désigne la course utile de la partie mobile et où E désigne l'épaisseur de l'entrefer mobile.

3. Capteur magnétique de position selon la revendication 1 ou 2 dans lequel la longueur de l'entrefer principal (11) est au moins égale à C+E, où C désigne la course utile de la partie mobile et où E désigne l'épaisseur de l'entrefer mobile.

4. Capteur magnétique de position selon l'une quelconque des revendications précédentes dans lequel la longueur de la partie aimantée est supérieure à la longueur de l'entrefer.

5. Capteur magnétique de position selon l'une quelconque des revendications précédentes dans lequel les parties ferromagnétiques (3, 4) sont de forme semi-cylindrique, le capteur détectant la position angulaire de l'aimant permanent (1, 2) de forme semi-tubulaire.

6. Capteur magnétique de position selon l'une quelconque des revendications précédentes dans lequel la partie mobile comprend deux aimants (1, 2) aimantés en sens opposés selon la plus faible épaisseur, les deux aimants étant juxtaposés selon la direction perpendiculaire au déplacement.

7. Capteur magnétique de position selon la revendication 1, dans lequel l'aimant permanent mince (1) est de forme rectangulaire et l'entrefer principal (11) est définit par une structure statorique présentant une forme générale de "U", la structure statorique présentant l'entrefer secondaire contenant un axe parallèle à la direction de déplacement, et perpendiculaire aux lignes de champs magnétique engendré par l'aimant permanent.

8. Capteur magnétique de position selon la revendication 1 dans lequel ledit capteur comporte un seul aimant (1) de forme semi-cylindrique aimanté selon le sens de la plus petite épaisseur, radialement et une culasse (3) formée par un cylindre ferromagnétique, l'ensemble constitué par l'aimant (1) et la culasse (3) constituant la partie mobile par rapport à une partie fixe formée par un stator (4) semi-annulaire réalisé en un matériau ferromagnétique, l'aimant (1) s'engageant dans l'entrefer principal, l'entrefer principal (11) étant annulaire d'épaisseur E et le flux se fermant par l'intermédiaire du stator (4) et de la culasse cylindrique (3) au travers du capteur, le capteur étant une sonde de Hall (7), perpendiculairement à l'axe de rotation, dans l'entrefer secondaire prolongeant l'entrefer principal.

9. Capteur magnétique de position selon la revendication 1 dans lequel l'aimant (1) est capable de se déplacer suivant une direction oblique par rapport au bord avant des surfaces ferromagnétiques (3, 4) de façon à ce que le degré d'engagement de l'aimant dans l'entrefer principale varie en fonction de la position de l'aimant selon cette direction oblique.

10. Capteur magnétique de position selon l'une quelconque des revendications précédentes dans lequel l'aimant ou l'entrefer principal présentent une largeur variable.

11. Capteur magnétique de position selon l'une quelconque des revendications précédentes dans lequel l'aimant présente une forme géométrique propre à permettre la compensation d'un défaut de linéarité due à une fuite magnétique ou à un champ perturbateur.

12. Capteur magnétique de position selon l'une quelconque des revendications précédentes dans lequel l'entrefer principal présente une forme géométrique propre à permettre la compensation d'un défaut de linéarité due à une fuite magnétique ou à un champ perturbateur.

13. Capteur magnétique de position selon la revendication 1 dans lequel ledit capteur est constitué par deux plaques (50, 51) formant deux pièces statoriques, ces plaques présentent des parties avant (52, 53) définissant l'entrefer principale (11), ledit entrefer étant de largeur variable, prolongée à l'arrière par une partie (54, 55) constituant la liaison avec l'entrefer secondaire, ces plaques étant montées à l'avant et à l'arrière sur des flasques (56, 57) perpendiculaires au plan des pièces statoriques, le capteur comportant en outre un aimant permanent (59) solidaire d'une tige de commande (61) apte à entraîner le déplacement de l'aimant (59) dans l'entrefer principal de forme triangulaire, le degré de pénétration variant entre une valeur minimale, lorsque l'aimant est repoussé contre la flasque avant (57), et une valeur maximale lorsque l'aimant (59) est repoussé à l'extrémité opposé de l'entrefer principal, s'arrêtant au niveau du début des parties arrières (54, 55) des pièces statoriques.

**Patentansprüche**

1. Magnetischer Positionssensor zur Abgabe eines elektrischen Signals proportional zur Position, bestehend aus einem beweglichen Teil, der mindestens einen schwachen Permanentmagneten (1) aufweist, der quer in Richtung der geringsten Dicke magnetisiert wird und in einem Hauptpolluftspalt (11) beweglich ist, senkrecht zur Magnetisierungsrichtung, wobei der besagte Spalt (11) durch mindestens zwei ferromagnetische Teile (3, 4) definiert wird; diese ferromagnetischen Teile definieren untereinander einen zweiten Spalt, der einen magnetischsensiblen Sensor aufweist, wobei der bewegliche Teil so konstruiert ist, dass das Eindringen eines magnetisierten Teils in den Hauptpolluftspalt (11) teilweise auf einem Teil des Nutzweges erfolgt und zwar so, dass der magnetisch-sensible Sensor ein Signal abgibt, das proportional zum Grad der angefachten aperiodischen Bewegung des magnetisierten Teils in diesen Hauptpolluftspalt ist, wobei der magnetisierte Teil dieses Sensors einen einzigen Magneten (1) aufweist, der sich gemäß einer Schräge gegenüber der Vorderkante der ferromagnetischen Flächen (3, 4) verschiebt, so dass der Grad der angefachten aperiodischen Bewegung des Magneten (1) im Hauptpolluftspalt (11) in Abhängigkeit der Position des Magneten, gemäß dieser Schräge variiert und der besagte magnetisch-sensible Sensor in dem zweiten Spalt angeordnet ist, der sich in einer Ebene befindet, die senkrecht zu den vom Permanentmagneten erzeugten Feldlinien liegt.

**2.** Magnetischer Positionssensor nach Anspruch 1, wobei die Länge des magnetisierten Teils mindestens C+E entspricht, wobei C den Nutzweg des beweglichen Teils beschreibt und E die Dicke des beweglichen Spaltes.

**3.** Magnetischer Positionssensor nach Anspruch 1 oder 2, wobei die Länge des Hauptpolluftspaltes (11) mindestens C+E entspricht und C den Nutzweg des beweglichen Teils beschreibt und E die Dicke des beweglichen Spaltes.

**4.** Magnetischer Positionssensor nach einem der vorangegangenen Ansprüche, wobei die Länge des magnetisierten Teils größer als die Länge des Spaltes ist.

**5.** Magnetischer Positionssensor nach einem der vorangegangenen Ansprüche, wobei die ferromagnetischen Teile (3, 4) halb-zylindrisch sind und der Sensor die Winkelposition des halb-röhrenförmigen Permanentmagneten (1, 2) ortet.

**6.** Magnetischer Positionssensor nach einem der vorangegangenen Ansprüche, wobei der bewegliche Teil zwei Magnete (1, 2) aufweist, die in entgegengesetzter Richtung, gemäß der geringsten Dicke, magnetisiert werden, wobei die beiden Magnete nebeneinander liegen, gemäß der Richtung senkrecht zur Verschiebung.

**7.** Magnetischer Positionssensor nach Anspruch 1, wobei der schwache Magnet (1) rechteckig ist und der Hauptpolluftspalt (11) durch eine Statorstruktur in allgemeiner "U-Form" definiert ist und die Statorstruktur den zweiten Spalt darstellt, der eine Achse aufweist, die parallel zur Verschieberichtung und senkrecht zu den vom Permanentmagneten erzeugten magnetischen Feldlinien liegt.

**8.** Magnetischer Positionssensor nach Anspruch 1, wobei der besagte Sensor einen einzigen halb-zylindrischen Magneten (1) aufweist, der gemäß der Richtung der geringsten Dicke radial magnetisiert wurde, sowie ein durch einen ferromagnetischen Zylinder gebildetes Joch (3), wobei die durch den Magneten (1) und das Joch (3) gebildete Einheit den beweglichen Teil gegenüber einem feststehenden Teil bildet, der wiederum von einem halb-ringförmigen, aus ferromagnetischem Werkstoff bestehenden Stator (4) gebildet wird; der Magnet (1) sitzt in dem Hauptpolluftspalt (11) mit der Dicke E und der magnetische Fluss wird über den Stator (4) und das zylindrische Joch (3) durch den Sensor eingeschlossen, wobei es sich bei dem Sensor um eine Hall-Sonde (7) handelt, die senkrecht zur Rotationsachse, in dem zweiten Spalt liegt, der den Hauptpolluftspalt verlängert.

**9.** Magnetischer Positionssensor nach Anspruch 1, wobei der Magnet sich gemäß einer Schräge gegenüber der Vorderkante der ferromagnetischen Flächen (3, 4) so verschieben kann, dass der Grad der angefachten aperiodischen Bewegung des Magneten in dem Hauptpolluftspalt in Abhängigkeit der Position des Magneten gemäß dieser Schräge variiert.

**10.** Magnetischer Positionssensor nach einem der vorangegangenen Ansprüche, wobei der Magnet oder der Hauptpolluftspalt eine variable Breite aufweist.

**11.** Magnetischer Positionssensor nach einem der vorangegangenen Ansprüche, wobei der Magnet eine geometrische Form aufweist, die den Ausgleich eines Linearitätsfehlers ermöglicht, der auf eine magnetische Streuung oder ein Störfeld zurückzuführen ist.

**12.** Magnetischer Positionssensor nach einem der vorangegangenen Ansprüche, wobei der Hauptpolluftspalt eine geometrische Form aufweist, die den Ausgleich eines Linearitätsfehlers ermöglicht, der auf eine magnetische Streuung oder ein Störfeld zurückzuführen ist.

**13.** Magnetischer Positionssensor nach Anspruch 1, wobei der besagte Sensor aus zwei Platten (50, 51) besteht, die zwei Statorteile bilden, wobei diese Platten vordere Teile (52, 53) aufweisen, die den Hauptpolluftspalt (11) mit variabler Breite definieren und die hinten durch einen Teil (54, 55) verlängert werden, der die Verbindung mit dem zweiten Spalt bildet. Diese Platten sind vorne und hinten an Seitenstücken (56, 57) montiert, die senkrecht zur Ebene der Statorteile liegen; der Sensor umfasst außerdem einen Permanentmagneten (59), der fest mit einer Steuerstange (61) verbunden ist, die die Verschiebung des Magneten in dem dreieckigen Hauptpolluftspalt bewirken kann, wobei der Durchdringungsgrad zwischen einem Minimalwert, wenn der Magnet gegen das vordere Seitenstück (57) abgestoßen wird, und einem Maximalwert, wenn der Magnet (59) an das gegenüber dem Hauptpolluftspalt befindliche Ende gestoßen wird, variiert und in Höhe der Anfangspunkte der hinteren Teile (54, 55) der Statorteile stehen bleibt.

**Claims**

**1.** Magnetic position sensor to output an electrical signal proportional to the position, consisting of a moving part with at least one thin permanent magnet (1) transversely magnetized in the direction of the least thickness, free to move within a main air gap (11) perpendicular to the direction of magnetization, the said air gap (11) being defined by at least to ferromagnetic parts (3, 4), these ferromagnetic parts defining a secondary air gap between them in which there is a magnetosensitive sensor, the moving part being arranged such that the penetration of a magnetized part in the main air gap (11) is partial over part of the useful travel distance such that the magnetosensitive sensor outputs a signal proportional to the insertion distance of the magnetized part into the said main air gap, the part of the said sensor comprising a single magnet (1) moving along a direction oblique to the front edge of the ferromagnetic surfaces (3, 4), such that the insertion distance of the magnet (1) into the main air gap (11) varies as a function of the position of the magnet along this oblique direction, and such that the said magnetosensitive sensor is arranged in the secondary air gap placed in a plane perpendicular to the field lines generated by the permanent magnet.

2. Magnetic position sensor according to claim 1, in which the length of the magnetized part is equal to at least C + E, were C denotes the useful travel distance of the moving part and E denotes the thickness of the moving air gap.

3. Magnetic position sensor according to claim 1 or 2, in which the length of the main air gap (11) is equal to at least C + E, where C denotes the useful travel distance of the moving part and in which E denotes the thickness of the moving air gap.

4. Magnetic position sensor according to any one of the previous claims, in which the length of the magnetized part is greater than the length of the air gap.

5. Magnetic position sensor according to any one of the previous claims, in which the ferromagnetic parts (3, 4) have a semi-cylindrical shape, and the sensor detecting the angular position of the permanent magnet (1, 2) has a semitubular form.

6. Magnetic position sensor according to any one of the previous claims, in which the moving part comprises two magnets (1, 2) magnetized in opposite directions parallel to the direction of least thickness, the two magnets being placed adjacent in the direction perpendicular to the displacement.

7. Magnetic position sensor according to claim 1, in which the thin permanent magnet (1) has a rectangular shape and the main air gap (11) is defined by a stator structure with a general "U" shape, the stator structure having the secondary air gap containing an axis parallel to the direction of displacement and perpendicular to the magnetic field lines generated by the permanent magnet.

8. Magnetic position sensor according to claim 1, in which the said sensor comprises a single semi-cylindrical shaped magnet (1) magnetized along the direction of least thickness, radially, and a yoke (3) formed by a ferromagnetic cylinder, the assembly composed of the magnet (1) and the yoke (3) forming the part free to move with respect to a fixed part formed by a semi-annular stator (4) made from a ferromagnetic material, the magnet (1) being inserted into the main air gap, the main air gap (11) being annular with thickness E and the flux being closed by the stator (4) and the cylindrical yoke (3) through the sensor, the sensor being a Hall probe (7) perpendicular to the axis of rotation, in the secondary air gap prolonged in the main air gap.

9. Magnetic position sensor according to claim 1, in which the magnet can be moved along a direction oblique to the front edge of the ferromagnetic surfaces (3,4) such that the degree of insertion of the magnet into the main air gap varies as a function of the position of the magnet along this oblique direction.

10. Magnetic position sensor according to any one of the previous claims, in which the width of the magnet or the main air gap is variable.

11. Magnetic position sensor according to any one of the previous claims, in which the magnet has a geometric shape to enable compensation of a linearity defect due to a magnetic leak or a disturbing field.

12. Magnetic position sensor according to any one of the previous claims, in which the main air gap has a geometric shape to compensate for a linearity defect due to a magnetic leak or a disturbing field.

13. Magnetic position sensor according to claim 1, in which the said sensor consists of two plates (50, 51) forming two stator parts, these plates representing front parts (52, 53) defining the main air gap (11), the said air gap having a variable width prolonged towards the back by a part (54, 55) forming the connection with the secondary air gap, these plates being installed at the front and at the back on end plates (56, 57) perpendicular to the plane of the stator parts, the sensor also comprising a permanent magnet (59) fixed to a control rod (61) that can displace the magnet (59) in the main triangular shaped air gap, the degree of penetration varying between a minimum value when the magnet is pushed into contact with the front end plate (57), and a maximum value when the magnet (59) is pushed to the opposite end of the main air gap, stopping at the beginning of the rear sections (54, 55) of the stator parts.

Fig.1

Fig. 2

Fig. 3

EP 0 986 731 B1

Fig.4

Fig. 5

Fig.6

Fig.7

Fig.8

Fig:9

Fig.10

Fig.11

Fig 12

Fig 13

Fig 14

Fig.15

FIG. 16

Fig.17

**Course du capteur 9.2 mm**
**Largeur de l'aimant varie linéairement de 1 à 4 mm en 9.2 mm**
**Entrefer 2.2 mm**
**Epaisseur d'aimant 1 mm**

Fig. 18

EP 0 986 731 B1

23

Fig.19